# FASCICULE DE BREVET EUROPEEN

(11) **EP 4 595 798 B1**
(45) Date de publication et mention de la délivrance du brevet: **29.07.2026**
(21) Numéro de dépôt: 25151512.8
(22) Date de dépôt: 13.01.2025
(51) Int. Cl.: A43B 7/24, A43B 13/14, A43B 13/16, B29D 35/12

(54) **CHAUSSURE**
SCHUH
SHOE

(30) Priorité: 02.02.2024 FR 2401057
(43) Date de publication de la demande: 06.08.2025
(73) Titulaire: Salomon S.A.S., 74370 Metz-Tessy (FR)
(72) Inventeur: CARO, Charles-Armand, 74370 Metz-Tessy (FR); PAL, Benjamin, 74940 Annecy-le-Vieux (FR); NORMAND, Joseph, 73100 Aix-les-Bains (FR); BOUCHER, Béatrice, 74270 Chilly (FR)
(74) Mandataire: Lapierre, Stéphane

(56) Documents cités:
- EP-A1- 3 790 732
- EP-A1- 4 048 107

## Description

La présente invention concerne une semelle de chaussure de sport.

L'invention vise une structure de semelle permettant d'obtenir un bon maintien latéral sans avoir besoin d'ajouter un châssis spécifique.

De manière classique, le semelage d'une chaussure comprend une couche d'amortissement monobloc assurant l'amortissement du semelage. Pour garantir une bonne stabilité latérale du pied, il est connu d'ajouter un châssis solidaire de la couche d'amortissement et remontant le long de la tige du côté médial et/ou latéral. Le document US6497058 décrit par exemple une telle construction.

D'un point de vue industriel, la couche d'amortissement est généralement réalisée par injection dans un moule d'une matière expansible, l'expansion de la matière permettant d'obtenir le dimensionnel souhaité étant réalisée soit dans le moule, soit en dehors du moule. Alternativement, la couche d'amortissement peut être réalisée par compression d'une préforme dans un moule au dimensionnel souhaité. Pour ces deux technologies, le moule utilisé comprend la plupart du temps, deux matrices mobiles, l'une par rapport à l'autre, selon un plan vertical. Ainsi, ces outils ne permettent pas d'avoir des bords latéraux et médiaux qui remontent verticalement, vers le haut, en recouvrement des quartiers de la tige, sur une grande hauteur sans avoir un risque de contre-dépouille et de remplissage du moule. Cette couche d'amortissement avec une faible hauteur de recouvrement latéral ne permet donc pas d'assurer un bon maintien latéral du pied.

Les documents EP4048107 et EP3790732 décrivent une construction couche d'amortissement en deux demi-portions, une latérale et une médiale. Dans ces deux documents, le bord périphérique de l'assemblage de ces deux demi-portions présente une faible hauteur depuis le face supérieure destinée à faire face au pied. L'objectif de cette construction est de pouvoir réaliser une couche d'amortissement comprenant des ouvertures transversales, avec des moules simples, deux empreintes. Pour ces modes de réalisation, les empreintes du moule sont mobiles selon un plan transversal au semelage et non selon un plan vertical comme évoqué précédemment.

Le but de l'invention est de proposer une semelle de chaussure améliorée.

Un but est de proposer une chaussure améliorant la stabilité latérale du pied sans l'ajout d'un châssis spécifique.

Un autre but est de proposer une couche d'amortissement réalisé à partir de moule simple, peu encombrant et préférentiellement à deux empreintes.

Un autre but est de proposer une construction apportant une raideur longitudinale au semelage afin d'améliorer le déroulé du pied.

L'invention propose une chaussure comprenant une tige comportant une enveloppe et un semelage comportant une demi-portion latérale et une demi-portion médiale, les demi-portions latérale et médiale étant solidarisées entre elles pour former une couche d'amortissement, la demi-portion latérale comprenant une paroi latérale s'étendant vers le haut pour couvrir au moins une partie latérale de l'enveloppe de la tige et/ou la demi-portion médiale comprenant une paroi médiale s'étendant vers le haut pour couvrir au moins une partie médiale de l'enveloppe de la tige.

La chaussure est caractérisée en ce que la paroi latérale et/ou médiale recouvre une première hauteur de recouvrement de tige au niveau de la zone des têtes des métatarses et, localement, une hauteur de recouvrement maximale de tige au niveau d'une zone de maintien, postérieure à la zone des têtes des métatarses, la hauteur de recouvrement maximale dans cette zone de maintien étant supérieure à au moins quatre fois la première hauteur de recouvrement.

La construction de la couche d'amortissement en deux demi-portions permet l'utilisation de moules simples, ceux-ci pouvant avoir seulement deux empreintes. Ces moules peuvent être compact et donc avoir un encombrement réduit ce qui les rend économique. Cette construction permet surtout de réaliser facilement une couche d'amortissement avec des parois latérale et médiale hautes afin de recouvrir certaines zones des quartiers de la tige. Ainsi, une partie de la couche d'amortissement peut recouvrir localement une partie de l'enveloppe de la tige afin d'apporter un meilleur maintien latéral de la tige. Par ailleurs, la réduction de la hauteur de recouvrement de la couche d'amortissement au niveau de la zone des têtes des métatarses permet de ne pas pénaliser le déroulé du pied en ne gênant pas la flexion de la tige à l'avant du pied. Cette construction présente donc un compromis entre le bon maintien latéral du pied et le bon déroulé de celui-ci. De plus, l'assemblage des deux demi-portions va générer une rigidification longitudinale de la couche d'amortissement ce qui améliore également le déroulé du pied en favorisant la bascule talon / orteils.

Selon des aspects avantageux mais non obligatoires de l'invention, un tel semelage externe de chaussure peut incorporer une ou plusieurs des caractéristiques suivantes, prises dans toute combinaison techniquement admissible :
- La hauteur de recouvrement maximale dans la zone de maintien est supérieure à au moins 75% de la hauteur de la tige au niveau de cette zone de maintien.
- Le semelage comprend une deuxième couche d'amortissement en appui sur une surface supérieure de la première couche d'amortissement, la deuxième couche d'amortissement étant monobloc et s'étendant sur au moins 80% de la longueur du semelage et sur au moins 60% de la largeur du semelage.
- Le matériau constituant la deuxième couche d'amortissement présente une dureté au moins 5% plus élevé que la dureté du matériau constituant la première couche d'amortissement.
- Le matériau constituant la deuxième couche d'amortissement est plus résilient que le matériau constituant la première couche d'amortissement.
- Les demi-portions latérale et médiale sont assemblées par contact entre une surface gauche médiale de la demi-portion latérale et une surface gauche latérale de la demi-portion médiale.
- Au niveau de la zone des têtes des métatarses, la largeur d'une surface supérieure de la demi-portion médiale est supérieure à au moins 120% d'une largeur d'une surface supérieure de la demi-portion latérale, lorsque les deux demi-portions sont assemblées.
- Au niveau de la zone de l'appui du calcanéum, la largeur d'une surface supérieure de la demi-portion médiale est supérieure à au moins 120% de la largeur d'une surface supérieure de la demi-portion latérale ou inversement.
- La hauteur de recouvrement maximale de tige se situe dans le tiers postérieur de la chaussure.

L'invention concerne également l'outillage pour la réalisation d'une des deux demi-portions décrites précédemment, celui-ci comprenant deux empreintes mobiles l'une par rapport à l'autre selon une direction inclinée par rapport à la direction transversale de la chaussure, d'un angle compris entre 30 et 60° mesurée autour de l'axe longitudinal de la chaussure, dans un sens trigonométrique ou anti-trigonométrique.

D'autres caractéristiques et avantages de l'invention seront mieux compris à l'aide de la description qui va suivre, en regard des dessins annexés illustrant, selon des formes de réalisation non limitatives, comment l'invention peut être réalisée, et dans lequel :
[Fig. 1] La figure 1 est une vue de dessus en perspective avant d'une chaussure pour pied droit selon un premier mode de réalisation de l'invention.
[Fig. 2] La figure 2 est une vue éclatée de la chaussure de la figure 1.
[Fig. 3] La figure 3 est une vue de côté de la chaussure de la figure 1.
[Fig. 4] La figure 4 est une vue en section transversale selon IV-IV de la figure 3.
[Fig. 5] La figure 5 est une vue de dessus de deux demi-portions composant une première couche d'amortissement de la chaussure de la figure 1 avant assemblage.
[Fig. 6] La figure 6 est une vue de dessus des deux demi-portions de la figure 5 assemblées.
[Fig. 7] La figure 7 est une vue en coupe longitudinale selon VII-VII de la figure 6 des deux demi-portions et d'une deuxième couche d'amortissement composant la chaussure de la figure 1.
[Fig. 8] La figure 8 est une vue en coupe transversale d'un outillage permettant de réaliser une première demi-portion composant la première couche d'amortissement de la chaussure de la figure 1.
[Fig. 9] La figure 9 est une vue en coupe transversale d'un outillage permettant de réaliser une deuxième demi-portion composant la première couche d'amortissement de la chaussure de la figure 1.

Dans la suite de la description, il sera fait usage de termes tels que « vertical », « supérieur », « inférieur », « haut », « bas », « transversal », « latéral », « médial », « droite », « gauche », « horizontal », « antérieur », « postérieur », « devant », « derrière », « avant », « arrière ». Ces termes doivent être interprétés de façon relative en relation avec la position que la chaussure occupe sur le pied d'un utilisateur en posture normale, et la direction d'avancement normale d'un utilisateur. On considère une posture normale, une configuration pour laquelle la semelle est posée à plat sur un sol horizontal.

Les termes « latéral » et « médial », de manière conventionnelle, s'entendent comme tournés respectivement vers l'extérieur et vers l'intérieur. Ainsi, le côté médial d'un pied ou d'une chaussure est tourné vers le côté médial de l'autre pied ou de l'autre chaussure de l'utilisateur.

Le terme « longitudinal » fait référence à une direction talon-orteils correspondant à l'axe X alors que le terme « transversal », fait référence à une direction médiale-latérale (pour un pied gauche) correspondant à l'axe Y et donc sensiblement perpendiculaire à la direction longitudinale. La direction verticale ou bas/haut correspond à l'axe Z. Un plan frontal ou coronal YZ est un plan perpendiculaire à un axe X. Un plan sagittal XZ est un plan perpendiculaire à un axe Y. Un plan transverse XY est un plan perpendiculaire à un axe Z.

Dans la description, une « chaussure » est définie par un « semelage » et une « tige ». Le « semelage » est la partie inférieure de la chaussure comprise entre le pied et le sol. C'est le « dessous » de la chaussure. Le semelage est positionné en vis-à-vis de la plante du pied. La « tige » est la partie supérieure de la chaussure enveloppant le pied et éventuellement une partie de la cheville, à l'exception du « dessous » du pied. C'est le « dessus » de la chaussure. La tige est solidarisée avec le bord périphérique du semelage. A noter que certains éléments de la chaussure peuvent former à la fois une partie du semelage et une partie de la tige.

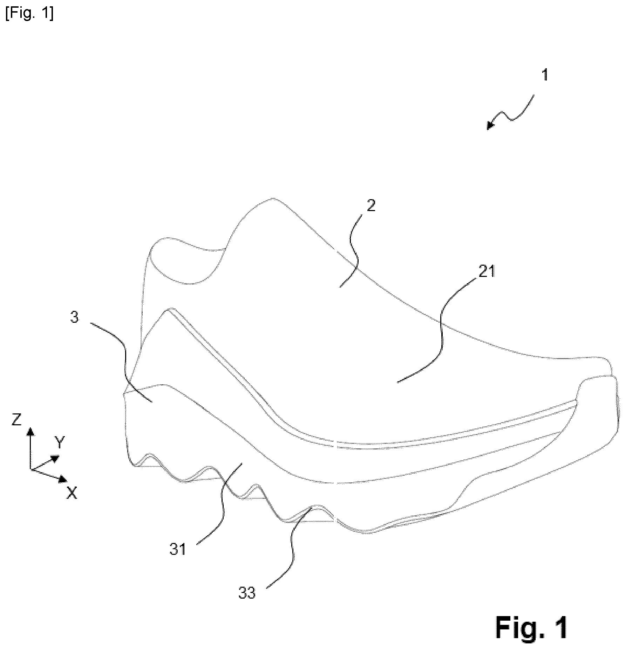

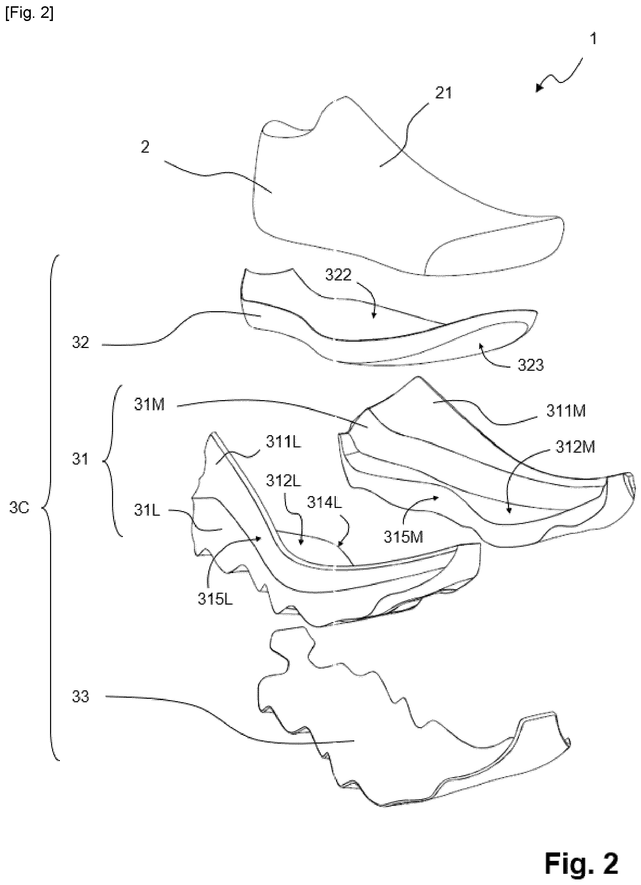

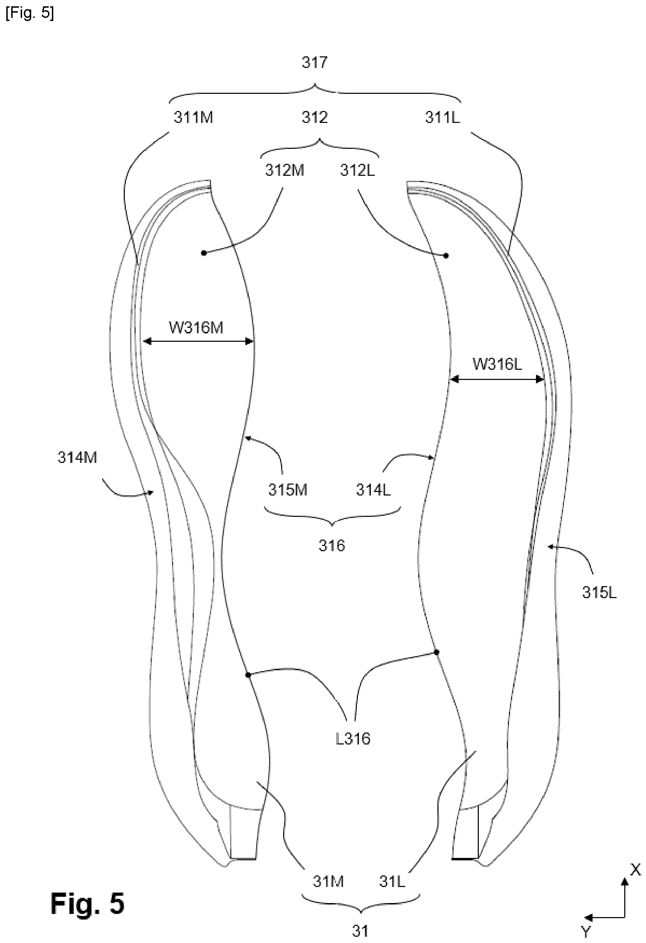

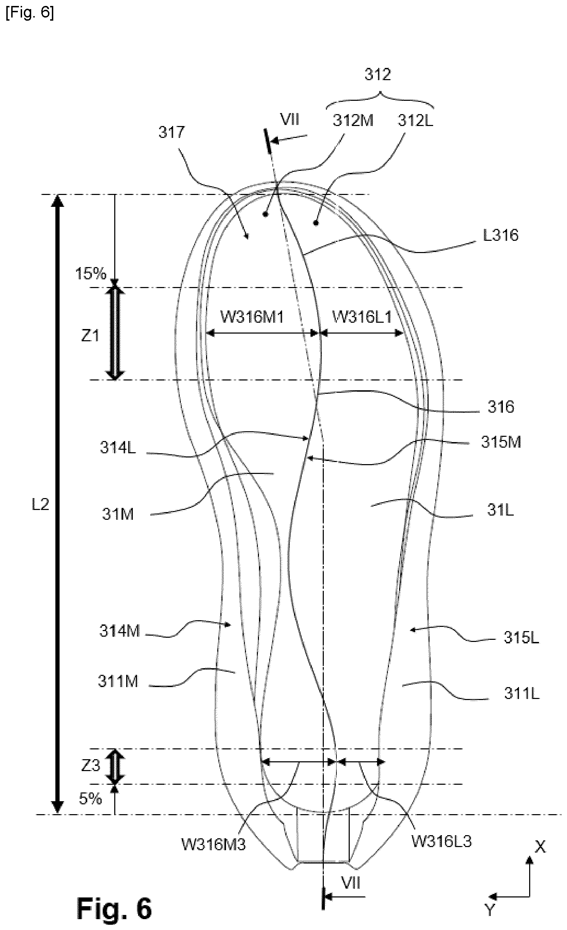

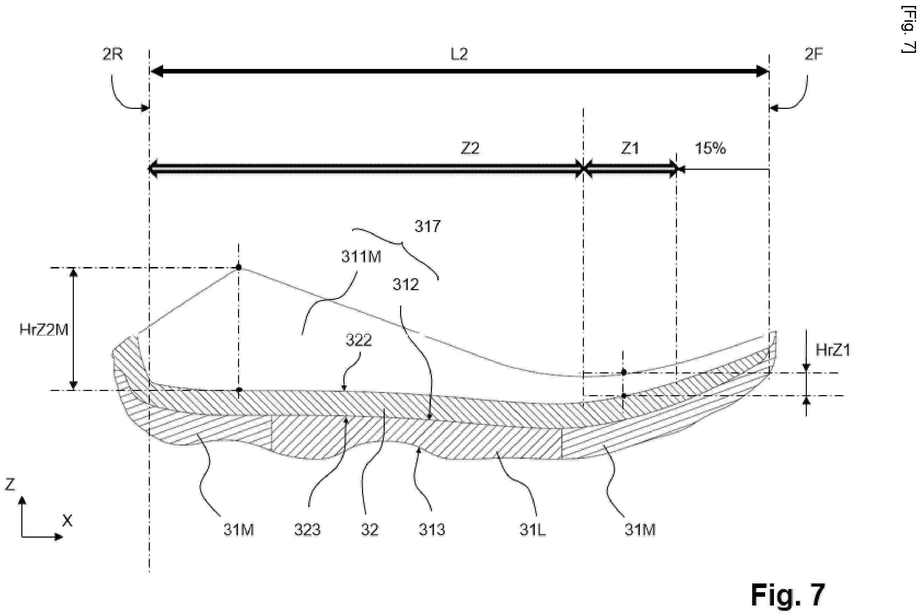

Les figures 1 à 7 illustrent la construction d'un semelage externe selon un premier mode de réalisation de l'invention dans une chaussure de sport 1. La chaussure de sport 1 pour pied droit représentée est une chaussure de course à pied, mais pourrait être un tout autre type de chaussure de sport. Cette chaussure 1 est représentée en perspective, vue de dessus dans la figure 1. Elle comporte une tige 2 surmontant un semelage 3. La tige 2 comprend une enveloppe 21 destinée à entourer le pied de l'utilisateur. L'enveloppe peut être localement multicouches. L'enveloppe 21 définit la longueur L2 de la tige mesurée entre une extrémité antérieure 2F et une extrémité postérieure 2R de la tige 2. La tige 2 est généralement obturée dans sa partie inférieure par une couche appelée première de montage 3B. Cette couche est positionnée au regard du dessous du pied. Les extrémités antérieure 2F et postérieure 2R de la tige 2 sont définies par les points extrêmes du pourtour de l'ouverture inférieure de la tige correspondant à la jonction entre la première de montage 3B et l'enveloppe 21. La tige ne sera pas décrite de façon détaillée dans la suite. Ce peut être n'importe quelle construction de tige.

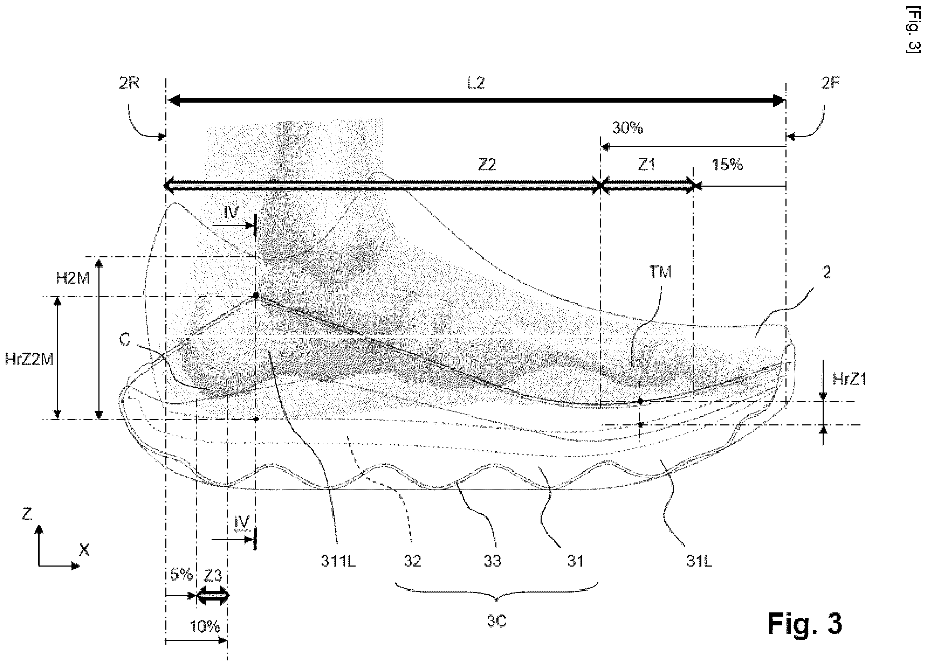

Dans la description, on distingue plusieurs zones du semelage, comme illustré à la figure 3. La zone Z1 des têtes des métatarses TM correspond à la zone située en dessous de l'emplacement des têtes des métatarses du pied lorsqu'il est chaussé. Cette zone Z1 correspond à une zone localisée entre 15% et 30% de la longueur de tige L2, depuis l'extrémité antérieure 2F de la tige 2, les têtes de métatarses étant généralement plutôt localisée entre 20 et 25% de cette longueur. La zone Z3 de l'appui du calcanéum C correspond à la zone située en dessous de l'extrémité inférieure de cet os du pied, le calcanéum, lorsqu'il est chaussé. Cette zone Z3 correspond à une zone localisée entre 5% et 10% de la longueur de tige L2, depuis l'extrémité postérieure 2R de la tige 2.

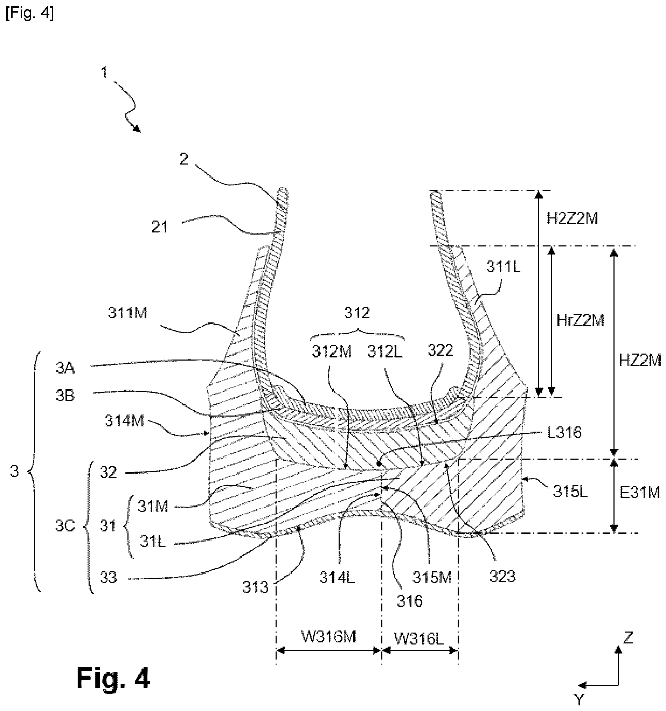

Le semelage 3 comprend une superposition de couches entre le sol et le dessous du pied, comme illustrée à la figure 4. En partant du pied, la première couche est une première de propreté 3A. Elle est généralement montée amovible à l'intérieur de la tige. La couche suivante, située dessous la première de propreté 3A, est une première de montage 3B. Cette deuxième couche 3B est généralement fixée aux bords périphériques inférieurs de la tige 2. Enfin, on retrouve un semelage externe 3C, sous la première de montage 3B. Ce semelage externe 3C est généralement fixé sur la première de montage 3B de toute façon connue en soi, comme par exemple, par collage. Ce semelage externe 3C est destiné à venir au contact du sol. La première de propreté 3A est optionnelle. La première de montage 3B est également optionnelle. Dans ce dernier cas, la tige peut être directement fixée sur le bord périphérique du semelage externe 3C.

L'invention porte sur une construction spécifique du semelage externe 3C.

Le semelage externe 3C comprend une couche d'amortissement 31 s'étendant sur sensiblement toute la longueur du semelage externe, c'est-à-dire, au moins 90% de la longueur totale du semelage externe. La couche d'amortissement 31 comprend une face inférieure 313 sur laquelle peut être fixée, de manière optionnelle, une couche d'usure 33 destinée à venir en contact avec le sol.

Selon l'invention, la couche d'amortissement 31 est composée de deux demi-portions, une demi-portion latérale 31L et une demi-portion médiale 31M. Chaque demi-portion s'étend longitudinalement sur sensiblement toute la longueur du semelage externe.

La demi-portion latérale 31L s'étend en largeur entre une face latérale externe 315L et une face médiale interne 314L. Elle comprend une surface supérieure 312L délimitée par une paroi périphérique verticale 311L s'étendant vers le haut depuis le bord avant, le bord latéral et le bord arrière de la surface supérieure 312L. Il n'y a donc pas de paroi verticale au niveau du bord médial de la surface supérieure 312L. Une partie de cette paroi périphérique 311L est conçue pour recouvrir partiellement l'enveloppe 21 de la tige 2. La hauteur de recouvrement Hr n'est pas constante et varie le long de la paroi périphérique.

La demi-portion médiale 31M s'étend en largeur entre une face latérale interne 315M et une face médiale externe 314M. Elle comprend une surface supérieure 312M délimitée par une paroi périphérique verticale 311M s'étendant vers le haut depuis le bord avant, le bord médial et le bord arrière de la surface supérieure 312M. Il n'y a donc pas de paroi verticale au niveau du bord latéral de la surface supérieure 312M. Une partie de cette paroi périphérique 311M est conçue pour recouvrir partiellement l'enveloppe 21 de la tige 2. La hauteur de recouvrement Hr n'est pas constante et varie le long de la paroi périphérique.

La hauteur de recouvrement Hr en un point est définie par la hauteur verticale de la zone de contact direct entre la paroi périphérique et l'enveloppe de la tige. La hauteur est mesurée dans un plan frontal YZ, comme illustré à la figure 4. La hauteur correspond à la distance entre la projection du point de contact haut sur un plan sagittal XZ et la projection du point de contact bas sur le même plan sagittal XZ.

Une fois assemblé, les deux demi-portions forment une cuvette 317 délimitée par un fond 312 et une paroi périphérique 311.

Le fond 312 est défini par la surface supérieure 312L de la demi-portion latérale 31L et la surface supérieure 312M de la demi-portion médiale 31M. Les deux surfaces supérieures 312L, 312M sont donc contigües pour former une surface continue 312.

La paroi périphérique 311 de la cuvette 317 est définie par la paroi périphérique verticale 311L de la demi-portion latérale 31L et la paroi périphérique verticale 311M de la demi-portion médiale 31M. La paroi périphérique 311 n'est pas nécessairement continue tout le long du pourtour de la cuvette. Elle peut être interrompue localement. La hauteur de la paroi périphérique 311 n'est pas constante tout le long du pourtour de la cuvette.

La face médiale interne 314L de la demi-portion latérale 31L et la face latérale interne 315M de la demi-portion médiale 31M sont dimensionnées et agencées pour venir en contact direct lorsque les demi-portions sont assemblées entre elles pour former la couche d'amortissement 31. Pour maintenir cet assemblage, on utilise un moyen d'adhésion approprié entre ces deux faces 314L, 315M. Une fois connectées, la face médiale interne 314L et la face latérale interne 315M définissent alors une surface interface commune 316. On définit comme ligne de démarcation L316, la ligne correspondant à l'intersection entre la surface interface 316 et le fond 312.

Selon un mode de réalisation, la surface interface 316 n'est pas plane mais est une surface gauche. Ainsi, les demi-portions latérale et médiale sont assemblées par contact entre la surface gauche médiale 314L de la demi-portion latérale 31L et la surface gauche latérale 315M de la demi-portion médiale 31M. Le fait d'être assemblé selon une surface interface 316 gauche permet d'améliorer la tenue de l'assemblage de la première couche d'amortissement 31, selon une direction longitudinale X. En effet, avec une connexion plane, lorsqu'on sollicite en cisaillement longitudinalement une demi-portion par rapport à l'autre, il est probable qu'on désolidarise les deux pièces au niveau de leur jonction (détérioration du moyen d'adhésion). Avec une surface gauche, la tenue en cisaillement longitudinale ne résulte pas uniquement du moyen d'adhésion entre les deux pièces mais elle est renforcée par l'imbrication de parties de ces pièces du fait d'avoir une surface interface gauche. On a une meilleure résistance par reprise mécanique des efforts de cisaillement.

Avantageusement, les demi-portions 31L, 31M sont dimensionnées de sorte que la ligne de démarcation L316 définit une courbe particulière telle que définit dans ce qui suit.

Selon un mode de réalisation, au niveau de la zone Z1 des têtes des métatarses TM, la largeur W316M de la surface supérieure 312M de la demi-portion médiale 31M est supérieure à au moins 120% de la largeur W316L de la surface supérieure 312L de la demi-portion latérale 31L, lorsque les deux demi-portions sont assemblées. Cette construction permet d'éviter d'avoir un point dur au droit des têtes des premier et deuxième métatarses. On peut ainsi avoir une zone localisée où on conserve une couche d'amortissement suffisante pour apporter un meilleur confort à un endroit où est exercé une pression sur le pied en fin de foulée, lors de la phase de propulsion.

Selon un mode de réalisation, au niveau de la zone Z3 de l'appui du calcanéum C, la largeur W316M de la surface supérieure 312M de la demi-portion médiale 31M est supérieure à au moins 120% de la largeur W316L de la surface supérieure 312L de la demi-portion latérale 31L ou inversement, c'est-à-dire, une configuration pour laquelle la largeur W316L d'une surface supérieure 312L de la demi-portion latérale 31L est supérieure à au moins 120% de la largeur W316M d'une surface supérieure 312M de la demi-portion médiale 31M. Cette construction permet d'éviter d'avoir un point dur dans une zone centrale au niveau du talon, au droit de l'extrémité inférieure de l'os du calcanéum. On peut ainsi avoir une zone localisée où on conserve une couche d'amortissement suffisante pour apporter un meilleur confort à un endroit où est exercé une pression sur le pied en début de foulée, lors de la phase d'attaque. La majorité des sportifs pratique une attaque « talon », c'est-à-dire qu'ils commencent leur foulée par un contact au sol au niveau du talon. Cela se traduit par un impact important au niveau de l'os du calcanéum. Il apparait donc important d'avoir un bon amortissement dans cette zone sensible et éviter tout point dur afin d'améliorer le confort.

Ce type de construction d'une couche d'amortissement en deux parties permet d'obtenir une zone de rigidité longitudinale résultant du moyen d'adhésion utilisé pour assembler les deux demi-portions, au niveau de la surface interface 316. Le moyen d'adhésion peut être de la colle. Cependant, ce peut être tout autre moyen approprié pour lier les deux pièces. Cette raideur longitudinale de la couche d'amortissement améliore le déroulé du pied en favorisant la bascule talon / orteils. On va donc ainsi améliorer la phase de propulsion de la foulée.

De manière générale, une chaussure est conçue de sorte que la face inférieure de la première de montage 3B connectée à la tige 2 soit solidarisée avec la surface supérieure du semelage externe 3C. Cette surface supérieure du semelage externe est donc une surface interface qui peut être désignée comme planche de collage, pavé de forme ou « footbed ». la première de montage 3B est souvent collée au semelage externe 3C. Cependant, d'autres moyens de solidarisation peuvent être envisagés.

Selon un premier mode de réalisation illustré aux figures 1 à 7, le semelage externe 3C comprend une deuxième couche d'amortissement 32 intercalée entre la première couche d'amortissement 31 et la tige 2. La deuxième couche d'amortissement 32 est monobloc et s'étendant sur au moins 80% de la longueur LS du semelage 3 et sur au moins 60% de la largeur WS du semelage 3. Cette deuxième couche d'amortissement 32 est destinée à s'insérer dans la cuvette 317. La face inférieure 323 de la deuxième couche d'amortissement 32 fait face au fond 312, c'est-à-dire, les faces supérieures 312M, 312L des demi-portions 31M, 31L. La face supérieure 322 de la deuxième couche d'amortissement 32 fait face à la face inférieure de la première de montage 3B connectée à la tige 2. Le bord périphérique de la deuxième couche d'amortissement 32 est entouré par une partie de la paroi périphérique 311, c'est-à-dire, les paroi périphériques 311M, 311L des demi-portions 31M, 31L. Cette paroi périphérique 311 s'étend vers le haut, au-delà de la face supérieure 322 de la deuxième couche d'amortissement 32. Dans cet exemple, la première de montage 3B est ainsi fixée sur la face supérieure 322 de la deuxième couche d'amortissement 32. De ce fait, les parties inférieures médiale et latérale de l'enveloppe 21 de la tige 2, à savoir les quartiers et les bords latéral et médial de la claque/empeigne, sont connectées aux bords de la face supérieure 322 de la deuxième couche d'amortissement 32 et sont recouvertes partiellement par la paroi périphérique 311. En conséquence, la hauteur de recouvrement Hr de la tige par la paroi périphérique 311 correspond à la hauteur verticale de la zone de contact direct entre la paroi périphérique et l'enveloppe de la tige. Cette hauteur est mesurée comme définie précédemment. On mesure cette hauteur depuis le bord de la surface supérieure du semelage externe. Ici, la mesure se fait donc du bord de face supérieure 322 de la deuxième couche d'amortissement 32, jusqu'au bord supérieure la paroi périphérique 311 à l'endroit où l'on souhaite la mesure.

Selon l'invention, la paroi latérale 311L et/ou médiale 311M recouvre une première hauteur de recouvrement HrZ1 de tige au niveau de la zone Z1 des têtes des métatarses TM et, localement, une hauteur de recouvrement maximale HrZ2M de tige au niveau d'une zone de maintien Z2, postérieure à la zone des têtes des métatarses, la hauteur de recouvrement maximale HrZ2M dans cette zone de maintien étant supérieure à au moins quatre fois la première hauteur de recouvrement HrZ1. La hauteur de recouvrement maximale HrZ2M de tige est mesurée au niveau où la paroi latérale et/ou médiale est la plus haute. A ce niveau, la hauteur de recouvrement maximale HrZ2M doit donc être au minimum égale à quatre fois la première hauteur de recouvrement HrZ1.

Cette construction permet d'avoir une faible hauteur de recouvrement de la tige, au niveau de l'avant de la chaussure, ce qui correspond au tiers antérieur de la chaussure, où on a besoin de pouvoir fléchir facilement la tige, notamment au niveau des têtes des métatarses, pour un bon déroulé du pied. A l'inverse, dans la partie arrière de la chaussure, ce qui correspond au deux tiers postérieur de la longueur L2 de la tige, cette construction permet d'avoir une hauteur de recouvrement de la tige plus importante pour protéger le pied et assurer une meilleure stabilité. Par exemple, on aura une meilleure stabilité quand on recouvre la partie latérale de la tige en regard de l'articulation de Lisfranc ou articulation tarsométatarsienne du pied lorsque le pied est dans la chaussure. Selon un autre exemple, on peut avoir une meilleure stabilité et protection quand on recouvre les quartiers au niveau des malléoles interne et/ou externe du pied lorsque le pied est dans la chaussure. Dans ce dernier cas, la hauteur de recouvrement maximale HrZ2M peut avantageusement se situer dans le tiers postérieur de la longueur L2 de la tige. Cela revient à avoir une zone de maintien Z2, plus réduite, correspondant à ce tiers postérieur eu lieu des deux tiers.

Selon un mode de réalisation, la hauteur de recouvrement maximale HrZ2M dans la zone de maintien Z2 est supérieure à au moins 75% de la hauteur H2Z2M de la tige au niveau de cette zone de maintien. Cette construction permet une grande zone de recouvrement en hauteur de la tige ce qui assure une meilleur maintien du pied du fait que peu de tige n'est pas contenu par la paroi périphérique 311 au niveau de la zone de maintien Z2.

Selon un exemple de réalisation, la chaussure 1 comprend une tige 1 comportant une enveloppe 21 et un semelage 3 comportant une demi-portion latérale 31L et une demi-portion médiale 31M, les demi-portions latérale et médiale étant solidarisées entre elles pour former une couche d'amortissement 31, la demi-portion latérale comprenant une paroi latérale 311L s'étendant vers le haut pour couvrir au moins une partie latérale 211L de l'enveloppe de la tige et/ou la demi-portion médiale comprenant une paroi médiale 311M s'étendant vers le haut pour couvrir au moins une partie médiale 211M de l'enveloppe de la tige. Dans cet exemple, la couche d'amortissement 31 définit une cuvette 317 délimitée par un fond 312 s'étendant sur au moins 80% de la longueur LS du semelage et sur au moins 60% de la largeur WS du semelage. La couche d'amortissement présente une épaisseur E31 délimitée par le fond 312 de la cuvette et une surface inférieure 313. On définit la hauteur HZ2 de la paroi périphérique 311, la hauteur entre le bord périphérique du fond 312 de la cuvette et le sommet de la paroi périphérique latérale/médiale. Dans cet exemple, la hauteur maximale HZ2M de la paroi périphérique 311 est supérieure à au moins deux fois l'épaisseur maximale E31M de la couche d'amortissement 31 mesurée dans une section frontale YZ de la chaussure au niveau longitudinal où la hauteur de la paroi périphérique est maximale, comme illustré à la figure 4. Cette construction est envisageable du fait que la couche d'amortissement soit en deux parties. En effet, on peut utiliser des moules permettant de réaliser des parois latérale/médiale plus hautes. En conséquence, ces hautes parois permettent d'apporter un meilleur maintien latéral et une meilleure protection du pied.

Avantageusement, la première couche d'amortissement 31 et la deuxième couche d'amortissement 32 sont constituées de matériaux différents.

Le matériau de la première couche d'amortissement 31 doit avoir une bonne tenue mécanique afin que la paroi périphérique 311 apporte suffisamment de maintien latéral pour assurer la stabilité recherchée. Par ailleurs, ce matériau doit également avoir une bonne résistance à l'abrasion afin de réduire son usure au contact des cailloux et autres aspérités du terrain. Enfin, ce matériau doit également avoir des caractéristiques d'amortissement car il contribue également à l'amortie de la chaussure.

Le matériau de la deuxième couche d'amortissement 32 est protégé par la première couche d'amortissement 31. Il doit cependant être mou et résilient afin d'améliorer le confort et l'amortie de la chaussure. Elle n'a pas besoin d'avoir une bonne résistance à l'abrasion ce qui permet d'avoir un plus grand choix de matériau permettant d'obtenir les caractéristiques d'amortissement recherchées.

Avantageusement, le matériau constituant la deuxième couche d'amortissement présente une dureté au moins 5% plus élevé que la dureté du matériau constituant la première couche d'amortissement. Cette dureté préférentiellement mesurée en Asker C. On obtient un bon amortissement associé à une bonne tenue avec des couches d'amortissements ayant une dureté comprise entre 40 et 50 Asker C.

La résilience est généralement mesurée par un essai classique qui consiste à faire tomber une masse (par exemple 5 kg), d'une hauteur donnée (par exemple 23,5 cm), sur l'échantillon à caractériser (ici, une partie du semelage externe). On mesure alors la hauteur de rebond de la masse. C'est cette hauteur qui caractérise la résilience. Cette résilience peut être qualifiée avec un essai, selon la norme D3574.

Avantageusement, le matériau constituant la deuxième couche d'amortissement est plus résilient que le matériau constituant la première couche d'amortissement. Cela peut se traduire par une hystérésis (D3574, en %), énergie élastique dissipée, de la deuxième couche d'amortissement préférablement inférieure à au moins 10% par rapport à l'hystérésis (D3574, en %) de la première couche d'amortissement.

La première couche d'amortissement 31 et la deuxième couche d'amortissement 32 sont constituées d'un matériau composé de mousse alvéolaire par exemple, d'un des matériaux suivants :
- Matière thermodurcissable : l'Ethylène-Acétate de Vinyle (EVA), Polyuréthane (PU)
- Matière thermoplastique élastomère : Polyuréthane ThermoPlastique (TPU), Thermopastique Elastomère base polyesther (TPEE), Polyether bloc amide (PEBA), Polyoléfine Thermoplastique (TPO/POE)
- Un mix des matériaux précédents.

Ces couches d'amortissement peuvent être obtenue par injection, compression ou par procédé additive tel que l'impression 3D. L'injection peut également être réalisée avec des matériaux à l'état supercritique. Le procédé de réalisation peut comprendre également une étape d'expansion dans une étuve sous conditions de température et pression contrôlées.

Selon un deuxième mode de réalisation, le semelage externe ne comprend pas de deuxième couche d'amortissement 32. Dans ce cas, la surface supérieure du semelage externe correspond donc à la surface supérieure 312 (312M + 312L) de la première couche d'amortissement 31. La première de montage 3B est alors fixée directement sur la première couche d'amortissement 31. La hauteur de recouvrement Hr de la tige par la paroi périphérique est mesurée depuis les bords de la surface supérieure 312 de la première couche d'amortissement 31. Les détails et caractéristiques décrits précédemment pour le premier mode de réalisation s'applique mutatis mutandis, à la deuxième couche d'amortissement 32 près.

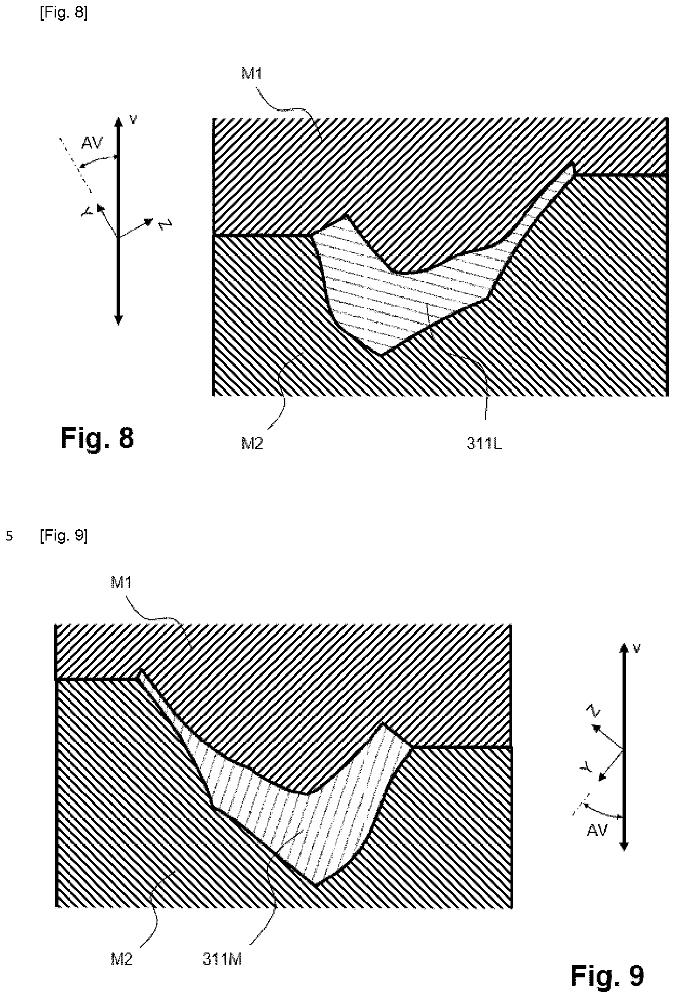

L'invention ne couvre pas un procédé de réalisation de demi-portions destinées à être assemblées entre elles pour former une couche d'amortissement d'une chaussure telle que définie précédemment. Ce procédé est caractérisé en ce que les empreintes M1, M2 de l'outillage pour la réalisation de ces demi-portions sont mobiles l'une par rapport à l'autre selon une direction V inclinée par rapport à la direction transversale Y de la chaussure, d'un angle AV compris entre 30 et 60° mesurée autour de l'axe longitudinal X de la chaussure, dans un sens trigonométrique ou anti-trigonométrique, comme illustré aux figures 8 et 9. Cette construction spécifique de ces outillages permet l'utilisation d'outillage peu encombrant, économique et permettant l'obtention de pièce de bonne finition avec de grande hauteur de paroi périphérique.

L'invention n'est pas limitée aux modes de réalisation précédemment décrits. Il est également possible de combiner ces modes de réalisation. L'invention s'étend à tous les modes de réalisation couverts par les revendications annexées.

### Références

- 1.: Chaussure
- 2.: Tige
21. Enveloppe
- 3.: Semelage
3A Première de propreté
3B Première de montage
3C. Semelage externe
31. Première couche d'amortissement
31L/M. Demi-portion Latérale/Médiale
311L/M Paroi périphérique Latérale/Médiale
312L/M Surface supérieure Latérale/Médiale
313 Surface inférieure
314L/M Face médiale de la demi-portion Latérale/Médiale
315L/M Face latérale de la demi-portion Latérale/Médiale
316 Surface interface commune
L316 Ligne de démarcation
317 Cuvette
32. Deuxième couche d'amortissement
322 Surface supérieure
323 Surface inférieure
33. Couche d'usure
- Z1: Zone des têtes de métatarses
- Z2: Zone de maintien
- Z3: Zone d'appui du calcanéum

## Revendications

1. Chaussure (1) comprenant :
- une tige (2) comportant une enveloppe (21) et
- un semelage (3) comportant une demi-portion latérale (31L) et une demi-portion médiale (31M), les demi-portions latérale et médiale étant solidarisées entre elles pour former une couche d'amortissement (31), la demi-portion latérale comprenant une paroi latérale (311L) s'étendant vers le haut pour couvrir au moins une partie latérale (211L) de l'enveloppe de la tige et/ou la demi-portion médiale comprenant une paroi médiale (311M) s'étendant vers le haut pour couvrir au moins une partie médiale (211M) de l'enveloppe de la tige
**caractérisée en ce que**
la paroi latérale et/ou médiale (311L, 311M) recouvre une première hauteur de recouvrement (HrZ1) de tige au niveau de la zone (Z1) des têtes des métatarses (TM) et, localement, une hauteur de recouvrement maximale (HrZ2M) de tige au niveau d'une zone de maintien (Z2), postérieure à la zone des têtes des métatarses, la hauteur de recouvrement maximale (HrZ2M) dans cette zone de maintien étant supérieure à au moins quatre fois la première hauteur de recouvrement (HrZ1).

2. Chaussure (1) selon la revendication 1 **caractérisée en ce que** la hauteur de recouvrement maximale (HrZ2M) dans la zone de maintien (ZM) est supérieure à au moins 75% de la hauteur de la tige (H2Z2M) au niveau de cette zone de maintien.

3. Chaussure (1) selon l'une des revendications précédentes **caractérisée en ce que** le semelage (3) comprend une deuxième couche d'amortissement (32) en appui sur une surface supérieure (312) de la première couche d'amortissement (31), la deuxième couche d'amortissement étant monobloc et s'étendant sur au moins 80% de la longueur (LS) du semelage et sur au moins 60% de la largeur (WS) du semelage.

4. Chaussure (1) selon la revendication précédente **caractérisée en ce que** le matériau constituant la deuxième couche d'amortissement présente une dureté au moins 5% plus élevé que la dureté du matériau constituant la première couche d'amortissement.

5. Chaussure (1) selon l'une des revendications 3 ou 4 **caractérisée en ce que** le matériau constituant la deuxième couche d'amortissement est plus résilient que le matériau constituant la première couche d'amortissement.

6. Chaussure (1) selon l'une des revendications précédentes **caractérisée en ce que** les demi-portions latérale et médiale sont assemblées par contact entre une surface gauche médiale (314L) de la demi-portion latérale (31L) et une surface gauche latérale (315M) de la demi-portion médiale (31M).

7. Chaussure (1) selon l'une des revendications précédentes **caractérisée en ce que**, au niveau de la zone (Z1) des têtes des métatarses, la largeur (W316M) d'une surface supérieure (312M) de la demi-portion médiale (31M) est supérieure à au moins 120% d'une largeur (W316L) d'une surface supérieure (312L) de la demi-portion latérale (31L), lorsque les deux demi-portions sont assemblées.

8. Chaussure (1) selon l'une des revendications précédentes **caractérisée en ce que**, au niveau de la zone (Z3) de l'appui du calcanéum (C), la largeur (W316M) d'une surface supérieure (312M) de la demi-portion médiale (31M) est supérieure à au moins 120% de la largeur (W316L) d'une surface supérieure (312L) de la demi-portion latérale (31L) ou inversement.

9. Chaussure (1) selon l'une des revendications précédentes **caractérisée en ce que** la hauteur de recouvrement maximale (HrZ2M) de tige se situe dans le tiers postérieur de la chaussure.

10. Outillage pour la réalisation d'une des deux demi-portions (31L, 31M) telles que définies dans l'une des revendications précédentes **caractérisé en ce qu'**il comprend les empreintes (M1, M2) mobiles l'une par rapport à l'autre selon une direction (V) inclinée par rapport à la direction transversale (Y) de la chaussure, d'un angle (AV) compris entre 30 et 60° mesurée autour de l'axe longitudinal (X) de la chaussure, dans un sens trigonométrique ou anti-trigonométrique.

## Patentansprüche

1. Schuh (1), umfassend:
- einen Schaft (2), der eine Hülle (21) aufweist, und
- eine Sohleneinheit (3), die ein laterales Halbteil (31L) und ein mediales Halbteil (31M) aufweist, wobei das laterale und das mediale Halbteil miteinander verbunden sind, um eine Dämpfungsschicht (31) zu bilden, wobei das laterale Halbteil eine laterale Wand (311L) umfasst, die dazu ausgebildet ist, mindestens einen lateralen Teil (211L) der Hülle des Schafts zu überdecken, und/oder das mediale Halbteil eine mediale Wand (311M) umfasst, die dazu ausgebildet ist, mindestens einen medialen Teil (211M) der Hülle des Schafts zu überdecken
**dadurch gekennzeichnet, dass**
die laterale und/oder mediale Wand (311L, 311M) im Bereich (Z1) der Mittelfußköpfchen (TM) eine erste Überdeckungshöhe (HrZ1) des Schafts aufweist und im Bereich einer Haltezone (Z2), die hinter dem Bereich der Mittelfußköpfchen liegt, lokal eine maximale Überdeckungshöhe (HrZ2M) des Schafts aufweist, wobei die maximale Überdeckungshöhe (HrZ2M) in dieser Haltezone mindestens das Vierfache der ersten Überdeckungshöhe (HrZ1) beträgt.

2. Schuh (1) nach Anspruch 1, **dadurch gekennzeichnet, dass** die maximale Überdeckungshöhe (HrZ2M) in der Haltezone (Z2) mindestens 75 % der Höhe des Schafts (H2Z2M) in dieser Haltezone beträgt.

3. Schuh (1) nach einem der vorhergehenden Ansprüche, **dadurch gekennzeichnet, dass** die Sohleneinheit (3) eine zweite Dämpfungsschicht (32) umfasst, die auf einer oberen Fläche (312) der ersten Dämpfungsschicht (31) aufliegt, wobei die zweite Dämpfungsschicht einstückig ist und sich über mindestens 80 % der Länge (LS) der Sohleneinheit und über mindestens 60 % der Breite (WS) der Sohleneinheit erstreckt.

4. Schuh (1) nach dem vorhergehenden Anspruch, **dadurch gekennzeichnet, dass** das Material, aus dem die zweite Dämpfungsschicht besteht, eine Härte aufweist, die mindestens 5 % höher ist als die Härte des Materials, aus dem die erste Dämpfungsschicht besteht.

5. Schuh (1) nach Anspruch 3 oder 4, **dadurch gekennzeichnet, dass** das Material, aus dem die zweite Dämpfungsschicht besteht, elastischer ist als das Material, aus dem die erste Dämpfungsschicht besteht.

6. Schuh (1) nach einem der vorhergehenden Ansprüche, **dadurch gekennzeichnet, dass** das laterale und das mediale Halbteil durch Kontakt zwischen einer medialen gekrümmten Fläche (314L) des lateralen Halbteils (31L) und einer lateralen gekrümmten Fläche (315M) des medialen Halbteils (31M) zusammengefügt sind.

7. Schuh (1) nach einem der vorhergehenden Ansprüche, **dadurch gekennzeichnet, dass** im Bereich (Z1) der Mittelfußköpfchen die Breite (W316M) einer oberen Fläche (312M) des medialen Halbteils (31M) mindestens 120 % einer Breite (W316L) einer oberen Fläche (312L) des lateralen Halbteils (31L) beträgt, wenn die beiden Halbteile zusammengefügt sind.

8. Schuh (1) nach einem der vorhergehenden Ansprüche, **dadurch gekennzeichnet, dass** im Bereich (Z3) der Auflage des Fersenbeins (C) die Breite (W316M) einer oberen Fläche (312M) des medialen Halbteils (31M) mindestens 120 % der Breite (W316L) einer oberen Fläche (312L) des lateralen Halbteils (31L) beträgt, oder dass umgekehrt die Breite (W316L) der oberen Fläche (312L) des lateralen Halbteils (31L) mindestens 120 % der Breite (W316M) der oberen Fläche (312M) des medialen Halbteils (31M) beträgt.

9. Schuh (1) nach einem der vorhergehenden Ansprüche, **dadurch gekennzeichnet, dass** sich die maximale Überdeckungshöhe (HrZ2M) des Schafts im hinteren Drittel des Schuhs befindet.

10. Werkzeug zur Herstellung eines lateralen oder medialen Halbteils (31L, 31M) einer Sohleneinheit (3) eines Schuhs (1) nach einem der vorhergehenden Ansprüche, **dadurch gekennzeichnet, dass** es Formhohlräume (M1, M2) umfasst, die relativ zueinander entlang einer Richtung (V) beweglich sind, die gegenüber der Querrichtung (Y) des Schuhs um einen Winkel (AV) geneigt ist, der zwischen 30 und 60° liegt und um die Längsachse (X) des Schuhs im Uhrzeigersinn oder gegen den Uhrzeigersinn gemessen wird.

## Claims

1. Article of footwear (1) comprising:
- an upper (2) comprising an envelope (21); and
- a sole structure (3) comprising a lateral half-portion (31L) and a medial half-portion (31M), the lateral and medial half-portions being secured to one another to form a cushioning layer (31), the lateral half-portion comprising a lateral sidewall (311L) extending upwardly so as to cover at least a lateral portion (211L) of the envelope of the upper and/or the medial half-portion comprising a medial sidewall (311M) extending upwardly so as to cover at least a medial portion (211M) of the envelope of the upper;
**characterized in that**
the lateral and/or medial sidewall (311L, 311M) covers the upper over a first covering height (HrZ1) in the zone (Z1) of the metatarsal heads (TM) and, locally, covers the upper over a maximum covering height (HrZ2M) in a support zone (Z2) located rearwardly of the zone of the metatarsal heads, the maximum covering height (HrZ2M) in said support zone being at least four times the first covering height (HrZ1).

2. Article of footwear (1) according to claim 1, **characterized in that** the maximum covering height (HrZ2M) in the support zone (Z2) is at least 75% of the height of the upper (H2Z2M) at said support zone.

3. Article of footwear (1) according to any one of the preceding claims, **characterized in that** the sole structure (3) comprises a second cushioning layer (32) arranged on an upper surface (312) of the first cushioning layer (31), the second cushioning layer being a one-piece layer and extending over at least 80% of the length (LS) of the sole structure and over at least 60% of the width (WS) of the sole structure.

4. Article of footwear (1) according to the preceding claim, **characterized in that** the material forming the second cushioning layer has a hardness that is at least 5% greater than the hardness of the material forming the first cushioning layer.

5. Article of footwear (1) according to claim 3 or 4, **characterized in that** the material forming the second cushioning layer is more resilient than the material forming the first cushioning layer.

6. Article of footwear (1) according to any one of the preceding claims, **characterized in that** the lateral and medial half-portions are assembled by contact between a medial curved surface (314L) of the lateral half-portion (31L) and a lateral curved surface (315M) of the medial half-portion (31M).

7. Article of footwear (1) according to any one of the preceding claims, **characterized in that**, in the zone (Z1) of the metatarsal heads, the width (W316M) of an upper surface (312M) of the medial half-portion (31M) is at least 120% of a width (W316L) of an upper surface (312L) of the lateral half-portion (31L), when the two half-portions are assembled.

8. Article of footwear (1) according to any one of the preceding claims, **characterized in that**, in the calcaneus support zone (Z3), the width (W316M) of an upper surface (312M) of the medial half-portion (31M) is at least 120% of the width (W316L) of an upper surface (312L) of the lateral half-portion (31L), or vice versa.

9. Article of footwear (1) according to any one of the preceding claims, **characterized in that** the maximum covering height (HrZ2M) of the upper is located in the rear third of the article of footwear.

10. Mould tooling for manufacturing one of the two half-portions (31L, 31M) as defined in any one of the preceding claims, **characterized in that** it comprises mould cavities (M1, M2) movable relative to one another along a direction (V) inclined with respect to the transverse direction (Y) of the article of footwear, by an angle (AV) ranging from 30° to 60° measured about the longitudinal axis (X) of the article of footwear, in a positive or negative angular direction.
